# EUROPEAN PATENT APPLICATION

(11) **EP 1 702 889 A2**
(43) Date of publication of application: **20.09.2006**
(21) Application number: 06425151.5
(22) Date of filing: 07.03.2006
(51) Int. Cl.: C02F 1/32, C02F 103/08, C02F 103/22

(54) **Apparatus for maintaining the hygienic, chemical and organoleptic characteristics of purified sea water with the scope of avoiding the formation of toxic and mutagenic by-products.**

(30) Priority: 08.03.2005 IT ba20050010
(71) Applicant: Amoruso, Giulia, 70010 Valenzano BA (IT)
(72) Inventor: Amoruso, Giulia, 70010 Valenzano BA (IT)

(57) **Abstract**

The machine is designed to maintain the hygienic chemical and organolettical characteristics of purified sea water with the scope of avoiding the formation of toxic and mutagens by-products..

R.33 (2), (3) e (5)

The unit is composed by a receiver (1), a refrigerator (3) connected to a steel pump (2) (whose delivery is controlled by an internal recycle valve), a first filtration system (4) (containing quartz grains of different sizes and equipped with a countercurrent washing valve), a second filtration system (5) (composed by a polpropilene filter situated in its own container), and a steel debacterising UV-C lamp (6) which ensures disinfection through a dosage of UV-C, regulated by the quantity of water to be treated. It is also equipped with: an electric panel to control the pump and the UV-C lamp, a tap (7) for dispensing the water and a canopy to preserve it from corrosion phenomena.

## Description

### TITLE OF THE INVENTION

The machine is designed to maintain the hygienic chemical and organolettical characteristics of purified sea water with the scope of avoiding the formation of toxic and mutagens by-products.

### THE INVENTION'S TECHNICAL APPLICATION R. 27-(1) (a)

The invention refers to a machine for the disinfection of purified sea water which is normally used during different phases of transformation and sale of fish products.

### CURRENT STATE OF THE ART R. 27 - (1) (b)

After being caught, fish suffer several of chemical-physical changes that modify their substance and outward appearance. These changes appear when the phase of "rigor mortis" finishes; this is why this phase is protracted as much as possible.

After "rigor mortis", the optimal organolectical fish's characteristics and its gastronomic value starts to degenerate.

The importance of these changes depends on the optimal conditions of the fish at the moment of fishing, (in particular a long agony favour their appearance), of the importance and type of contaminants, of temperature and time to preserve and of hygienic conditions during phases of working and sale of fish products.

Microbiological contaminations during the phases of working and sale are due to use of not microbiological pure sea water and historical events talk about the food tossinfections due to use of not purified sea water on fish products.

This invention in fundamental to satisfy the hygienic sanitary request of the fish business field and of other business fields interested in giving a solution to this important problem.

### THE TECHNICAL PROBLEM TO SOLVE R. 27 - (1) (c)

The invention has the finality of making a machine which is able to solve hygienic -sanitary water linked to several phases of fish products's working like (washing, cutting, refreshing, sale), to improve hygienic conditions, protracting their shelf-life, so to give to customer a safer and edible product, in according to the present UE legislation.

The production of microbiological purified sea water is a need in factory of fish products' depuration and stabulation, in according to European Legislation presented in matter; so, now the invention allows to use already purified sea water in these factories, in fishmongers, restaurants and supermarkets.

### THE ADVANTAGES OF THE INVENTION R. 27 - (1) (c)

The machine allows the use of the purified sea water, which would otherwise be forbidden, during the phases of fish's working and sale, ensuring the maintenance of hygienic, microbiological, chemical and organolectical parameters, without inducing mutagenes and toxic by-products.

Besides, the correct use of sea water so made, improves hygienic fish products' conditions, protracting their shelf-life, characteristics of freshness and taste, giving the final customer a safer and edible product.

### DESCRIPTION ABOUT HOW TO MAKE THE INVENTION WITH REFERENCE TO THE SCHEME R. 27 - (1) (d) e (e)

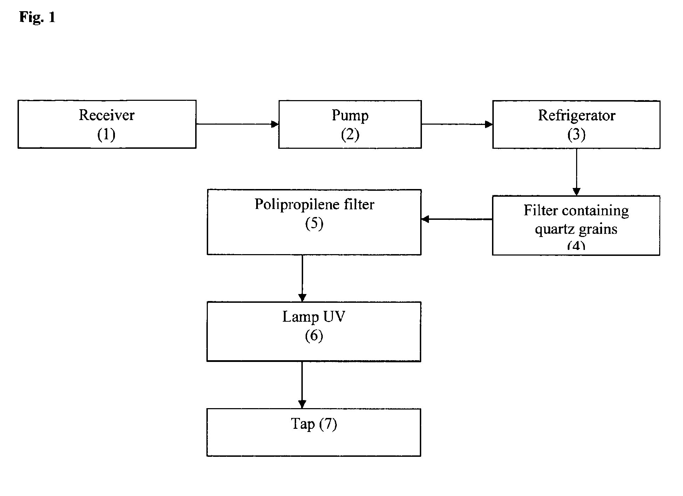

The machine is able to treat and recycle already purified sea water, subjecting it to a storage process, to refrigeration temperatures, refining, and purification. The unit is composed of: **Fig. 1**
- Suction
- Refrigeration
- Prefiltration
- Micrometrical filtration
- Disinfection UV-C

The purified sea water is stocked in a receiver (suitable for food applications) and is suctioned from a steel pump, whose delivery is regulated by an internal recycle valve.

The water is then refrigerated; the refrigeration power is determined by the quantity of water being treated, the refrigeration temperature desired and by the time. The refrigerated water is pushed through a filter containing quartz grains of different sizes and equipped with a countercurrent washing valve.

The smallest particles are caught by the following micrometrical filtration, composed by a polpropilene filter situated in its own container.

The size of the two filters is determined by the quantity of water to be treated and by the pump's delivery.

The clarified and filtered water is therefore sent to a UV debacterising lamp. The uv-C radiation dosage is also determine by the the quantity of water to be treated and by the pump's delivery.

The physical treatment with ultraviolet radiation does not cause overdosage problems (as happens with chemicals products); in addition, it has the advantage of not modifying the chemical and oragnolectical characteristics of the treated edible substances.

The refrigerated, cleared, filtered and purified water can then be taken from a tap.

The unit is equipped with an electric panel which allows to control the pump and the UV lamp.

An hour-counter shows the functioning time of the lamp.

The machine is covered by a canopy which preserves it from corrosion phenomena.

## Claims

1. the unit is composed by a receiver (1), a refrigerator (3) connected to a steel pump (2) (whose delivery is controlled by an internal recycle valve), a first filtration system (4) (containing quartz grains of different sizes and equipped with a countercurrent washing valve), a second filtration system (5) (composed by a polpropilene filter situated in its own container), and a steel debacterising UV-C lamp (6) which ensures disinfection through a dosage of UV-C, regulated by the quantity of water to be treated. It is also equipped with: an electric panel to control the pump and the UV-C lamp, a tap (7) for dispensing the water and a canopy to preserve it from corrosion phenomena.

2. The presence of the UV lamp as a disinfection system, allows a full and efficient disinfection action, maintaining the organolectical, chemical and physical characteristics of purified sea water, and ensuring the absence of disinfection by-products(mutagenes and toxigenes) and is extremely easy to maintain.

3. The presence of a refrigeration system situated before the quartz filter, immediately after the aspiration pump, ensures the preservation of purified sea-water.

4. The presence of a canopy, preserves the machine from corrosion phenomena.
